# EUROPEAN PATENT APPLICATION

(11) **EP 0 535 895 A2**
(43) Date of publication of application: **07.04.1993**
(21) Application number: 92308824.9
(22) Date of filing: 28.09.1992
(51) Int. Cl.: G06F 15/72

(54) **Apparatus and method for generating a set of patterns for a plane tessellation**

(30) Priority: 01.10.1991 JP 278894/91
(71) Applicant: INTERNATIONAL BUSINESS MACHINES CORPORATION, Armonk, N.Y. 10504 (US)
(72) Inventor: Nakayama, Yasutomo, Asaka-shi, Saitama-ken (JP)
(74) Representative: Burt, Roger James, Dr.

(57) **Abstract**

The invention relates to apparatus for generating a set of patterns (25) suitable for forming a plane tessellation comprising input means (26, 27, 28) for generating a set of lines, processing means (22A, 22B) for modifying the lines, and display means (21) for displaying the result of the modification process.

According to the invention the apparatus is characterised in that the processing means comprises line moving and modifying means (22A) for placing the lines in selected relative positions and modifying the lines so as to form a basic pattern, line transformation means (22B) for transforming the lines using selected shapes in a complementary manner so as to transform the basic pattern into a final pattern suitable for tessellation, and replicating means for replicating the final pattern to form the set of patterns.

## Description

The present invention relates to an apparatus and a method of generating a set of patterns which can be used to form a plane tessellation. A tessellation is a patterned area formed from a set of replicated patterns which fit together to cover the area exactly.

### Prior Art:

M. C. Escher, a wood-block artist of Holland, got the idea of a plane tessellation from the arabesque of the Alhambra and left many works of periodic designs. It is already known that the types of symmetries (plane symmetries) of such plane tessellation are limited to seventeen in number. However, there are infinite variations of the symmetrical patterns fitting to the types. Escher found various symmetrical patterns with his gifted creative power and craftsmanship, and applied birds, fishes and insects to them. Creation of symmetrical patterns inherently requires a special skill different from ordinary pictures. Escher, with his skilled art, made full use the techniques such as translation, rotation and reflection. It has so far been known that, by using those techniques to transform two curves while maintaining symmetry, a plane tessellation can be generated. For instance, a square is a tile, that is, a pattern which can cover the plane without gaps by itself. A pattern obtained by outwardly deforming one side of the square and inwardly deforming the corresponding side by the same amount can also be used as a tile. To create a pattern of a more complicated design, it is only needed to devise the arrangement and combination of curves and repeat many linked transform operations. However, it is very inefficient to perform such a special transformation work using the functions of the traditional drawing software, namely, line drawing, moving and copying, and thus this is not impractical. Those which repetitively produce basic mosaic patterns are disclosed in Japanese Published Unexamined Applications Nos. 61-40677 and 63-280387 official gazettes. However, they are not for generating a pattern which can cover a plane without gaps.

The object of the present invention is to provide an improved apparatus and method for generating a set of patterns suitable for forming a plane tessellation.

The invention relates to apparatus for generating a set of patterns suitable for forming a plane tessellation comprising input means for generating a set of lines, processing means for modifying the lines, and display means for displaying the result of the modification process.

According to the invention the apparatus is characterised in that the processing means comprises line moving and modifying means for placing the lines in selected relative positions and modifying the lines so as to form a basic pattern, line transformation means for transforming the lines using selected shapes in a complementary manner so as to transform the basic pattern into a final pattern suitable for tessellation, and replicating means for replicating the final pattern to form the set of patterns.

The invention also relates to a method of generating a set of patterns suitable for forming a plane tessellation comprising generating a set of lines, moving and modifying the lines, and displaying the result of the modification process.

According to the invention the method is characterised in that the moving and modifying step comprises placing the lines in selected relative positions and modifying the lines so as to form a basic pattern, transforming the lines using selected shapes in a complementary manner so as to transform the basic pattern into a final pattern suitable for tessellation, and replicating the final pattern to form the set of patterns.

It is an object of the present invention to provide a means and method for allowing a plane tessellation to easily be created without requiring a special skill.

The present invention is implemented by adding the functions for handling "flexible curves" described below to a typical drawing software.

### (1) Flexible curves

Flexible curves are not "drawn" as straight lines or curves served in the conventional drawing software, but they are curves (including straight lines) which are obtained by "transforming" a line segment to a free shape like a wire. Flexible curves can be transformed into a desired shape by some means (for instance, by applying a template-like pattern).

### (2) Link

Specified two lines L1 and L2 have a link relationship. That is, two flexible curves are associated with each other and transform together. As one of the linked flexible curves is transformed, the other one is also automatically complementarily transformed. The complementary links include a "translation and rotation link" and a "glide-reflection link."

### (3) Translation and rotation link

This means the case where two curves L1 and L2 are made to match each other by parallel displacement and rotational displacement, that is, the case where they are in a relationship in which line L2 is obtained by moving each point of curve L1 to the point inclined by the angle of rotation through the corresponding end point of curve L2. The angle of rotation (the relative angle of the two curves) is set by the operator in the range of 0 to 360 degrees.

### (4) Glide-reflection link

This means the case where two curves L1 and L2 are in a glide-reflection relationship, that is, curve L2 is obtained by moving each point of curve L1 through the corresponding end point of curve L2 to the point which is symmetrical with respect to a line having an inclination of the angle of the axis of reflection. The angle of the axis of reflection (with respect to the horizontal line of the screen) is set by the operator in the range of 0 to 180 degrees.

### (5) Forward correspondence and reverse correspondence

Any one of the two ends of a flexible curve is specified as a "fixed end." In this case, the end not so specified is called a "free end." "Forward correspondence" refers to the case where the corresponding end points of the linked two flexible curves are fixed end to fixed end and free end to free end, and "reverse correspondence" refers to the reverse case.

In order that the invention may be more readily understood an embodiment skill now be described with reference to the accompanying drawings, in which:
Figure 1 is a diagram showing the functional configuration of the apparatus for generating patterns for a plane tessellation, to be described,
Figure 2 is an illustration showing an example of the display screen of the display unit in Figure 1,
Figure 3 is a flowchart showing the outline of the process for generating a plane tessellation according to the apparatus being described,
Figure 4 is a flowchart showing the details of the line generation process of Figure 3,
Figure 5 is an explanatory view of the data structure of a line,
Figure 6 is a flowchart showing the details of the relationship specifying process of Figure 3,
Figure 7 is a flowchart showing the details of the relative angle specifying process of a line,
Figure 8 is a flowchart showing the process for specifying and changing the fixed end of a line,
Figure 9 is a flowchart showing the status of the data processing for the line transfer operation,
Figure 10 is a flowchart showing the status of the data processing for the line rotation operation,
Figure 11 is a flowchart showing an example of the transformation process using a model as one type of transformation process,
Figure 12 is an illustration showing the status of the data structure for the transformation process of Figure 11,
Figure 13 is a chart showing the status of the data processing for the magnification and reduction operations in the transformation process using a model,
Figure 14 is a flowchart showing the details of the link transformation process of a line,
Figure 15 is an explanatory view of lines in a link relationship,
Figure 16 is a flowchart showing the details of the link transformation process of Figure 14,
Figure 17 is an illustration for explaining the process of the link transformation,
Figure 18A is an illustration showing the process of drawing a periodic design of a bird picture using the apparatus described,
Figure 18B is an illustration showing the process of drawing a periodic design of a bird picture using the apparatus described;
Figure 19A is an illustration showing the process of drawing a periodic design of another bird picture using the apparatus described,
Figure 19B is an illustration showing the process of drawing a periodic design of another bird picture using the apparatus described,
Figure 20 is an illustration showing the process of creating a winged horse picture as a basic pattern, and
Figure 21 is an illustration showing the process of creating a lizard picture as a basic pattern.

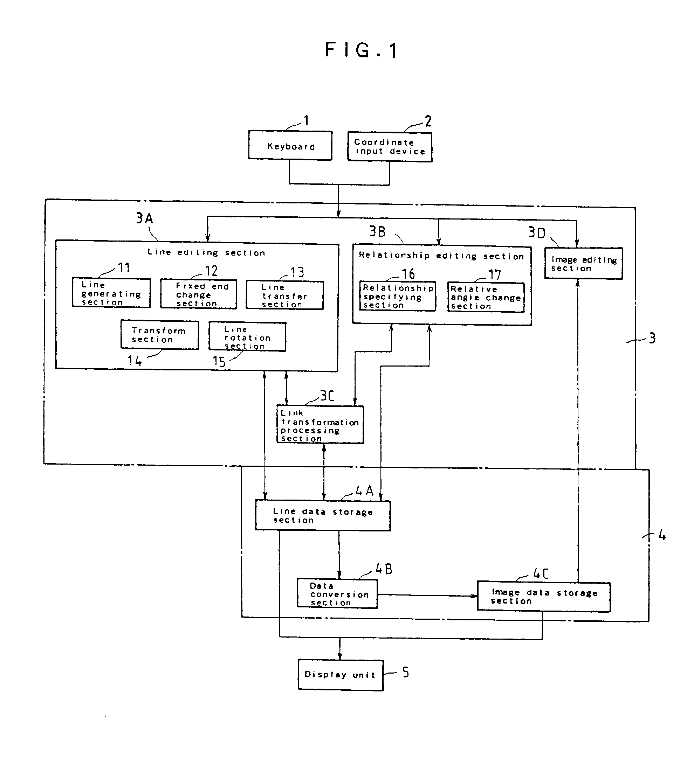

Figure 1 shows the functional configuration of apparatus for generating a plane tessellation according to a method described herein. In the figure, 1 is a keyboard and 2 is a coordinate input device. The input of graphic information, such as lines or graphics, and the selection of commands are performed through these input devices. A mouse is used as the coordinate input device 2 in the apparatus being described. However, a pen tablet, track ball or the like may also be used. Item 3 is a graphic processing section for performing various graphic processings in response to the input, and comprises a line editing section 3A for performing a drawing process inherent to the method being described, a relationship editing section 3B, a link transformation processing section 3C, and an image editing section 3D for performing a drawing process similar to the typical drawing device. Item 4 is a storage section for storing the data of lines and graphics. Item 5 is a display unit which can output and display the process and results of graphics, and through which the operator can interactively input the information, commands and menus required for graphics. The output means also include a printer and an image storage device. The line editing section 3A includes a line generating section 11 for generating lines as the elements of a basic pattern, a fixed end change section 12 for performing the change of the specification of the fixed end, a transfer section 13 for performing the transfer of a line, a transform section 14 for transforming a line or pattern, and a rotation section 15 for the transformation process of a line. The relationship editing section 3B has a relationship specifying section 16 for specifying the relationship between lines, and a relative angle change section 17 for specifying or changing the relative angle between lines. The link transformation processing section 3C executes a transformation process linked with the transformation process in the line editing section 3A in accordance with the link relationship specified in the relationship editing section 3B. The storage section 4 includes a line data storage section 4A for storing line data and the like, a data conversion section 4B for converting line data, and an image data storage section 4C for storing line and graphic data as image data.

Although the apparatus for generating a plane tessellation in Figure 1 may be configured using a microprocessor which performs the functions of the various sections, it may also be implemented by a general purpose computer. That is, the procedure for graphic processing or the commands and necessary data for the graphic processing can be stored in the storage section 4. The procedure for executing the graphic processing section 3 can be stored in a ROM, RAM or a storage including a buffer in the form of a program. It can be stored together with the related data. Then, the processing on lines and graphics is executed by the CPU using the above-mentioned data and in accordance with the above procedures. The result can be outputted and displayed on the display unit 5 so that the operator can perform interactive inputting.

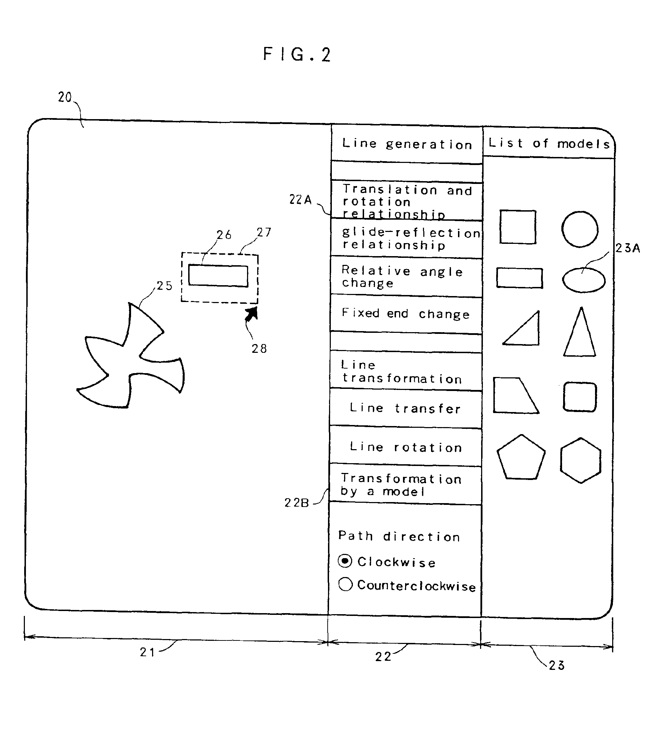

An example of the display screen 20 of the display unit 5 is shown in Figure 2. The display screen 20 includes a work area 21, a command menu area 22, and a model menu area 23. In the work area 21, an object pattern 25, a model 26, a frame for model transfer and transformation 27, and a cursor28 linked with a mouse are displayed. In the command menu 22, a command menu for graphic processing usually provided in the conventional drawing program such as straight line and rectangle, a command menu 22A for generating lines, and a command menu 22B for specifying a "transformation according to a model" are shown. In the model menu area 23, there is a library area in which the model libraries 23A held in the memory portion 4 are listed.

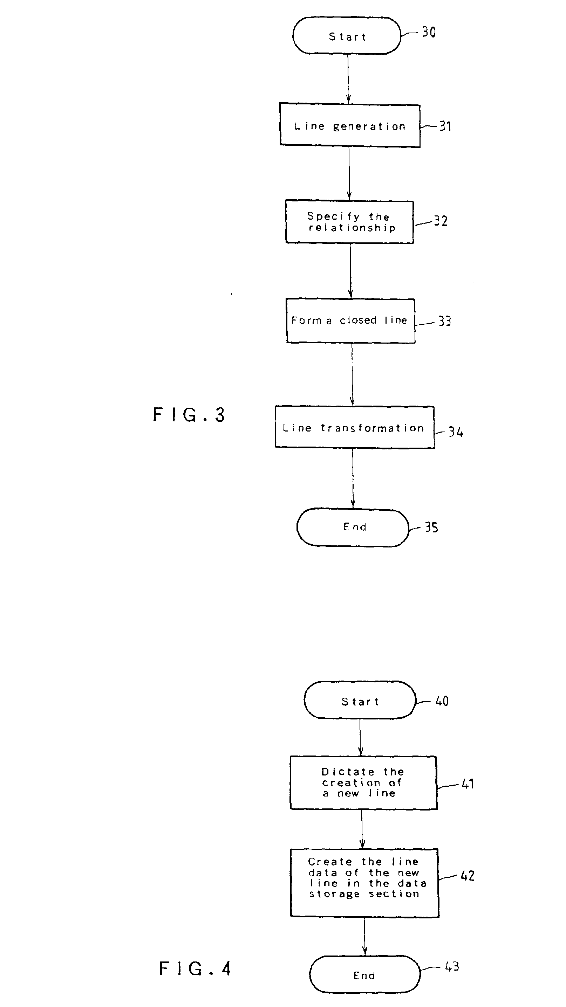

Figure 3 is a flowchart showing the outline of the method of generating a plane tessellation being described. First, two lines are generated by the line generating section 11 (step 31). Then the link relationship of these lines is specified by the relationship specifying section 16 (step 32). In the relative angle change section 17, the specification and change of the relative angle between the lines are also performed. As a result, the other linked line is transformed in the link transformation processing section 3C. In the fixed end change section 12, the fixed end of a line can be specified or changed as needed. When the specifying of generation and relationship on the necessary number of lines has been completed, the lines are moved in cooperation with each other so that one closed curve is formed by all the curves (step 33). Incidentally, it is not always necessary that the respective lines be connected at their end points. They may intersect intermediately of the curves. Accordingly, part of the closed curve may have branches. However, it is necessary to delete the branch portions up to the final stage of the creation of a basic pattern because they are unnecessary.

The lines are then processed in the transform section 14 and the rotation section 15. If a certain line is subjected to a transformation process, the other linked line is transformed in the link transformation processing section 3C (step 34). When a desired pattern or a basic pattern is completed, the finishing work is entered. A necessary ornamentation is applied to the basic pattern in the image editing section 3D. The basic pattern is replicated and they are mutually moved and rearranged so that the edges match each other. By repeating the replication, a plane tessellation is completed.

Figure 4 is a chart showing the detail of the line generation process (step 31 of Figure 3). When the operator selects "line generation" from the command menu 22A for graphic processing, one line having a fixed end is displayed at a predetermined location in the screen 20. The data of the line is stored in the storage section 4.

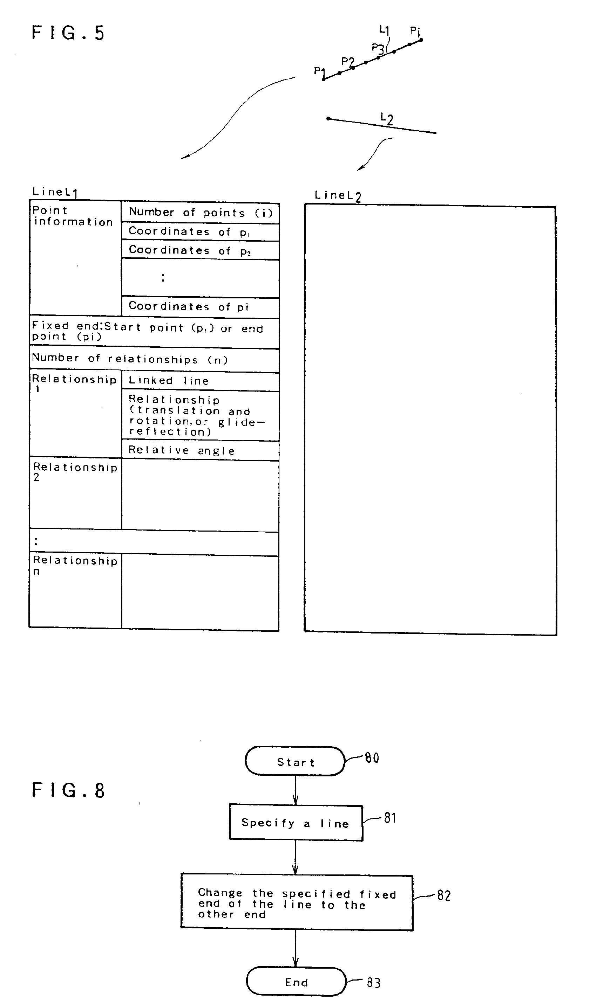

Lines L1 and L2 are formed from a set of points (P1, P2,...,Pi), as shown in Figure 5, and the number of points (i), the "X- and Y-coordinates" of each point Pi, the position of the fixed end, and the interrelation of a plurality of lines having a link relationship, that is, related line Land the contents of the relation and the data of the related angle are recorded in the storage sections. Although a link relationship is the relationship between two lines, each curve could have link relationships with other curves. It could thus happen that one curve has relationships with a plurality of curves. Similarly, the related data is recorded for each line L2, L3,...,Ln. The interrelation between curves is defined as follows.

### (1) Link

Specified two curves L1 and L2 have a link relationship. That is, two flexible curves are linked and transform together. As one of the linked flexible curves is transformed, the other one is also automatically complementarily transformed. The complementary links include a "translation and rotation link" and a "glide-reflection link."

### (2) Translation and rotation link

This means the case where the two curves L1 and L2 are made to match by parallel displacement and rotational displacement. The angle of rotation (the relative angle of the two curves) is set by the operator in the range of 0 to 360 degrees.

### (3) Glide-reflection link

This means the case where the two curves L1 and L2 are in a glide-reflection relationship. The angle of the axis of reflection (with respect to the horizontal line of the screen) is set by the operator in the range of 0 to 180 degrees.

### (4) Forward correspondence and reverse correspondence

Any one of the two ends of a flexible curve is specified as a "fixed end." In this case the end not so specified is called a "free end." "Forward correspondence" refers to the case where the corresponding ends of the linked two flexible curves are fixed end to fixed end and free end to free end, and "reverse correspondence" refers to the reverse case.

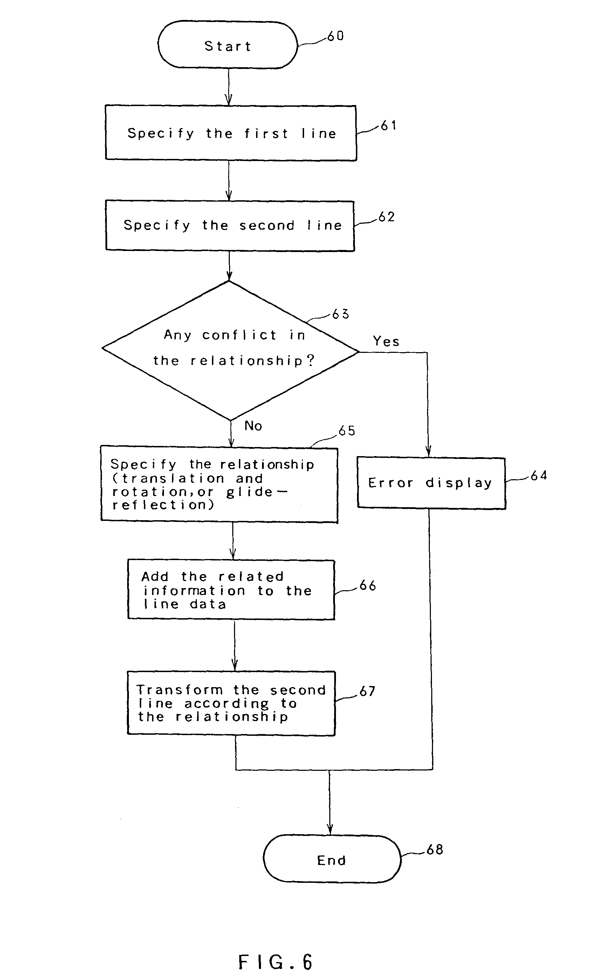

Figure 6 is a chart showing the details of the process of specifying the relationship (step 32 of Figure 3). The operator specifies two lines L1 and L2 (steps 61 to 62). A check is made for any conflict in the specified relationship (step 63), and an error is displayed if there is a conflict. If there is no conflict, then the mutual link relationship, namely a translation and rotation link or glide-reflection link, is specified (step 65). Then, the related data is additionally stored in the storage section. The other linked line L2 is also transformed.

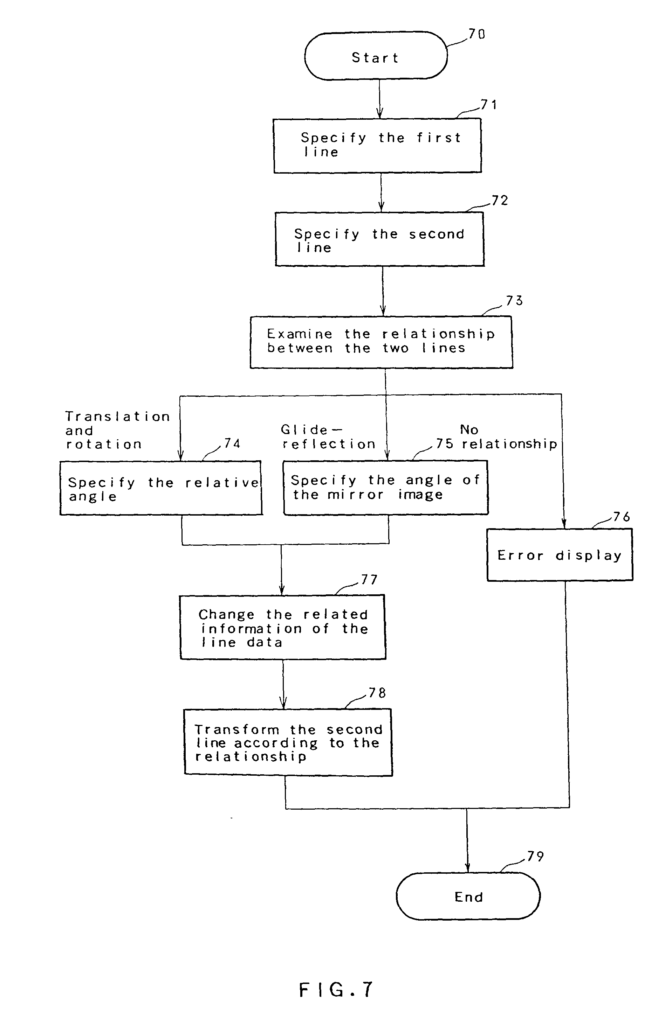

Figure 7 shows the process of specifying and changing the relative angle between the lines by the relative angle change section 17. If there is no specified relationship between the two lines, an error is displayed. The relative angle is specified for the translation and rotation, or the angle of axis of reflection is specified for the glide-reflection. The related data of the lines is then updated, and the other linked line L2 is transformed.

Figure 8 shows the process of specifying and changing the fixed end of a line in the fixed end change section 12.

The operator can select the command menu 22A for graphic processing in the command menu area, and can perform transfer or rotation processing so that the line has a location, size and angle suitable for the transformation process. Depending on the command for transfer or rotation and the amount of the mouse operation, the X- and Y-coordinate values of each point Pi of the model are calculated to update the data in the storage section.

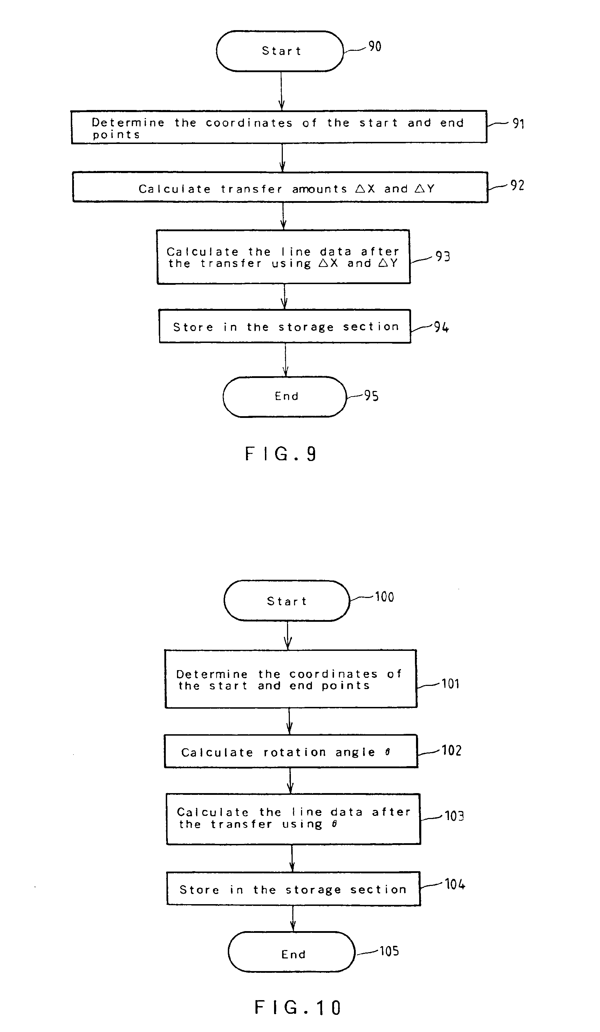

For transfer, as shown in Figure 9, first the coordinates of the start and end points of the dragging by the mouse are determined. Then, from the difference between these coordinate values, transfer amounts X and Y are calculated (92), and the line data after the transfer is calculated and stored in the storage section (94).

For rotation, as shown in Figure 10, the rotation angle goof the line is determined from the difference between the start and end points of the dragging (102), and the line data after the rotation around the fixed end is calculated and stored in the storage section (104).

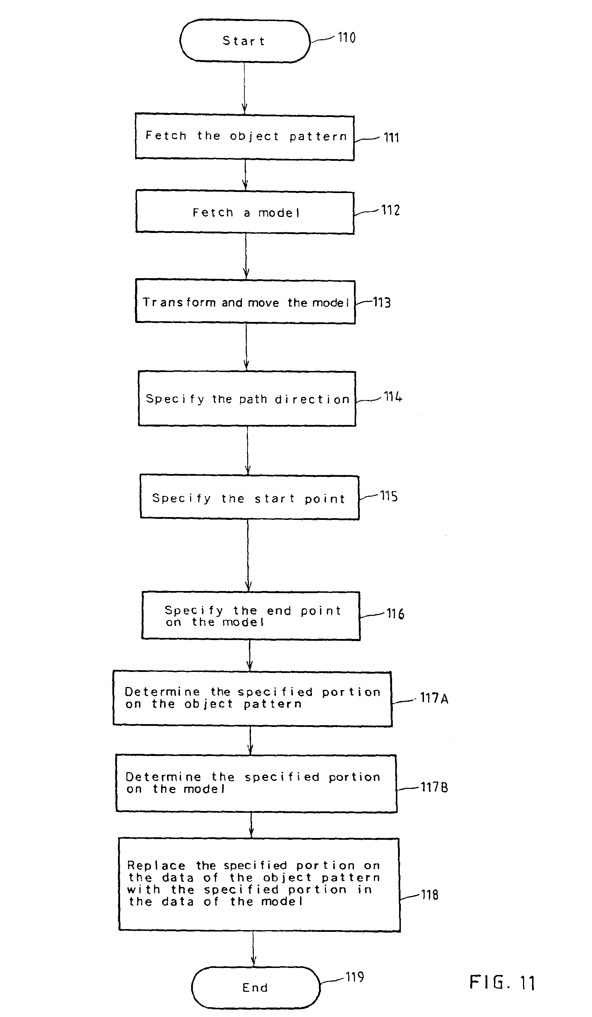

Figure 11 shows an example of the transformation process using a model as a type of transformation process. A model can be used to perform processing of transformation, transfer, rotation, or magnification or reduction so that a line has a shape, location, size and angle suitable for the transformation process. For the transformation process, first an object pattern 25, for instance, a curve L1, is captured, that is, the object pattern is specified, and its data is captured (step 111). This data is shown in Figure 5. Then a model 26 is captured (step 112). The model 26 consists of a line drawing having a closed path, for instance, a polygon, circle or other closed curve, and is selected from the model libraries 23A displayed in the model menu area 23 of the display screen. The model 26, after being transformed as necessary, is moved so that at least part of it overlaps the object pattern 25 (step 113). Then, the direction of the path (clockwise or counterclockwise) is specified (step 114), and the intersection point of the model 26 and the object pattern 25 is specified as the start point (step 115). Any point on the model is specified as the end point (step 116). The direction of the path can be specified in the previous step. Based on the above specifications, the determination of the specified portion on the object pattern and the specified portion on the model, namely, the recognition of the data of the specified portions is processed (step 117). Finally, the specified portion data of the object pattern data is replaced by the specified portion data of the model (step 118).

The rules for graphic transformation are as follows.
(1) The first point or the start point (PS) must be an intersection point of the object pattern of the model.
(2) If the second point or the end point (PT) is the other intersection point of the object pattern and the model, the start point TS - end point TT portion on the object pattern is replaced by the start point CS - end point CT portion on the model. Here, the start point CS - end point CT portion on the model is defined as the path extending in the specified direction from CS.
(3) If the end point PT is not an intersection point of the object pattern and the model, the start point TS - end point TL portion on the object pattern is replaced by the start point CS - end point CT portion on the model. In this case, the end point TL is defined as the end point which exists inside the model with the start point TS being the boundary.

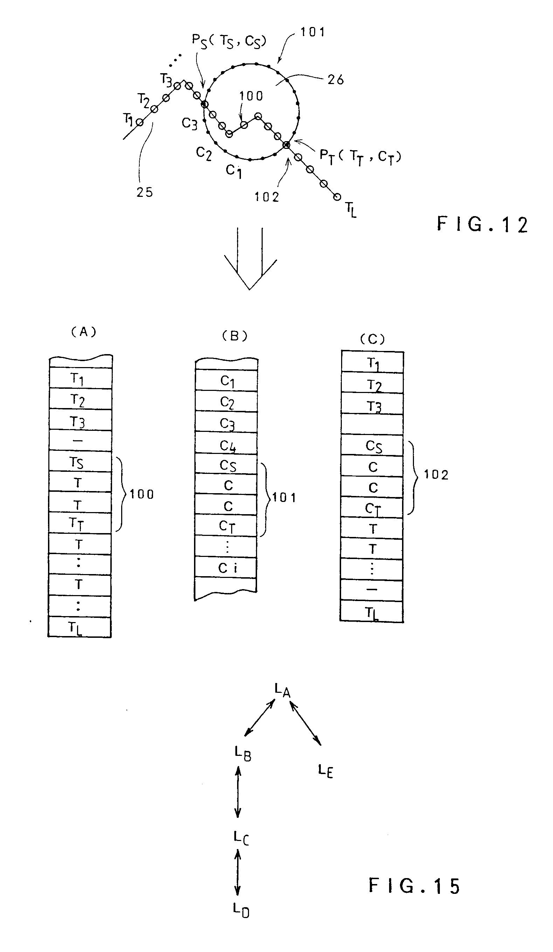

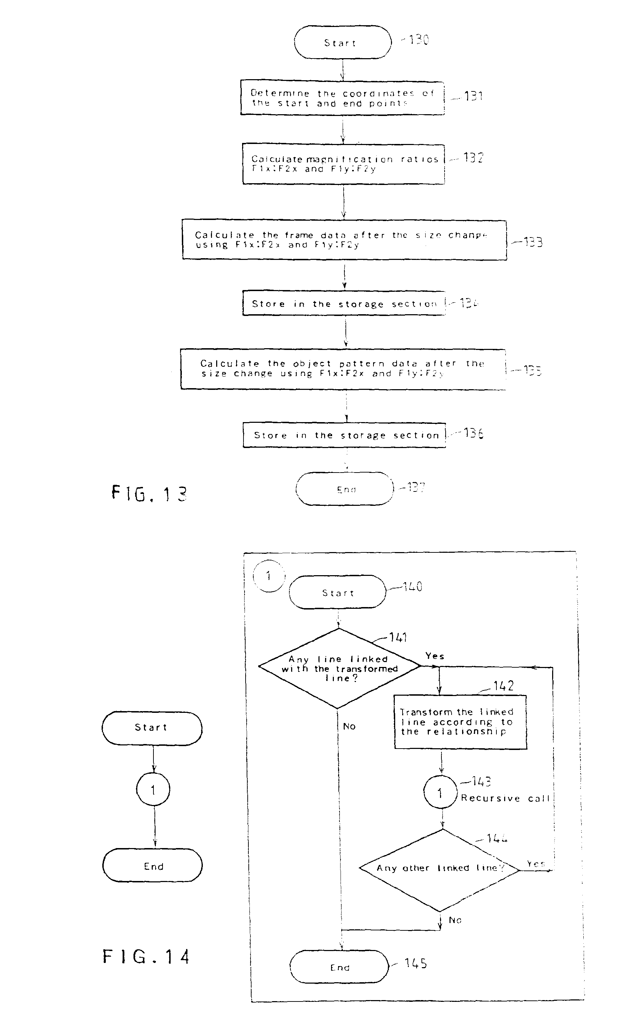

Figure 12 shows the status of the data structure of the storage section 4 in steps 116 to 118 of Figure 11. The data of the specified portion on the object pattern is replaced by the data of a specified portion on the model. That is, the data TS - TT of a specified portion 100 on the object pattern 25 shown in (A) is replaced by the data CS - CT of a specified portion 101 on the model 26 shown in (B), whereby the data (C) of the transformed pattern 102 is obtained. T and C are the corresponding data in each points Pi of the object pattern 25 and the model 26, respectively.

Regarding the transfer and rotation of the frame, the data of the frame and the object pattern after the rotation is calculated and stored in the storage section in the same manner as described in Figures 9 and 10. For magnification and reduction, the ratios of size change of the frame 27, namely F1x:F2x and F1y:F2y are determined (132) as in Figure 13, and the data of the frame and the object pattern afterthe size change is calculated and stored in the storage section (134, 136).

The link transformation processing section 3C, upon the transformation of one curve L, performs a link transformation of the other curve L on the basis of the specified relationship and stores the data in the storage section.

Following is a description of the link transformation as shown in Figures 14 to 17.

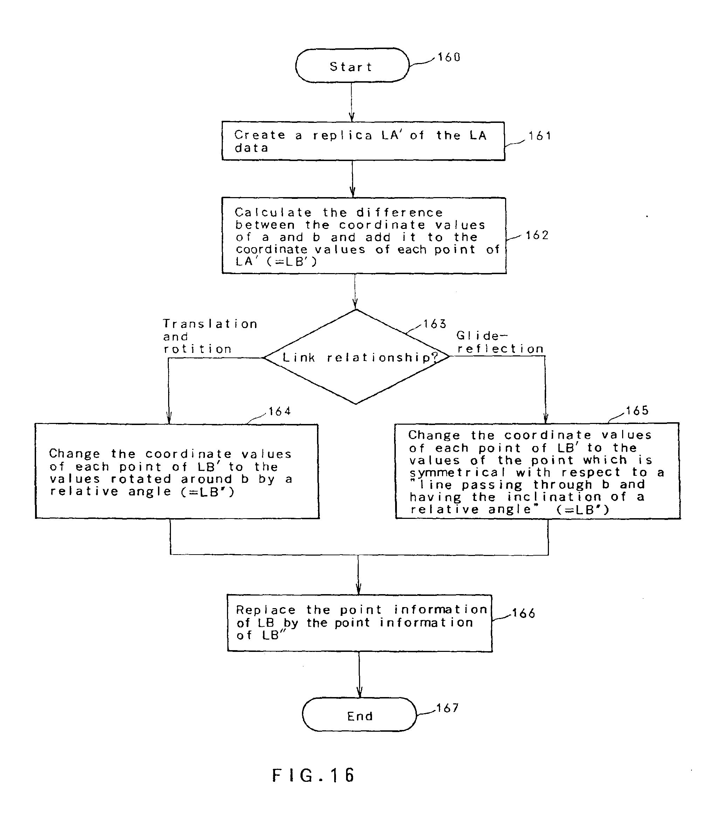

Figure 14 shows the operation of the link transformation processing section 3C. If there is a line having a relation with the transformed line, that line is transformed. Further, a line having a relation with that line is transformed,...., that is, the lines in a link relationship are transformed one after another by recursive call. For instance, it is supposed that there are five lines like L_{A} to L_{E} having the relationship as shown in Figure 15 and the line L_{A} has been transformed. The link transformation processing section 3_{c} first checks for any line having a relation with the transformed line L_{A} (141), delineates the line L_{B}, and performs a transformation process on the basis of the specified relationship (142). Further, it delineates the line L_{c} linked with the line L_{B} by recursive call, and performs a transformation process on the basis of the specified relationship (143 to 142). When the recursive call and transformation process for the line L_{D} is completed in a similar manner, it goes back to the previous recursive call and checks whether there is an additional line having a relation with the line L_{c}. Since there is no additional line having a relation, it further goes back to the previous recursive call to check for an additional line having a relation with the line L_{B}. Similarly, a check is made as to whether there is an additional line having a relation with the line L_{A}. As a result, the line L_{E} is delineated, and the answer to step 144 becomes positive and a transformation process is performed on the basis of the specified relationship (142). Since there is no further line having a relation with the line L_{E}, the answer to step 144 becomes negative and the link process terminates. In this way, whatever line is changed, all the other lines in a link relationship with it are subjected to a transformation process. In the example in Figure 15, however, it the lines L_{D} and L_{E} are directly related to each other, the total link relationship becomes indefinite so that the link cannot be specified.

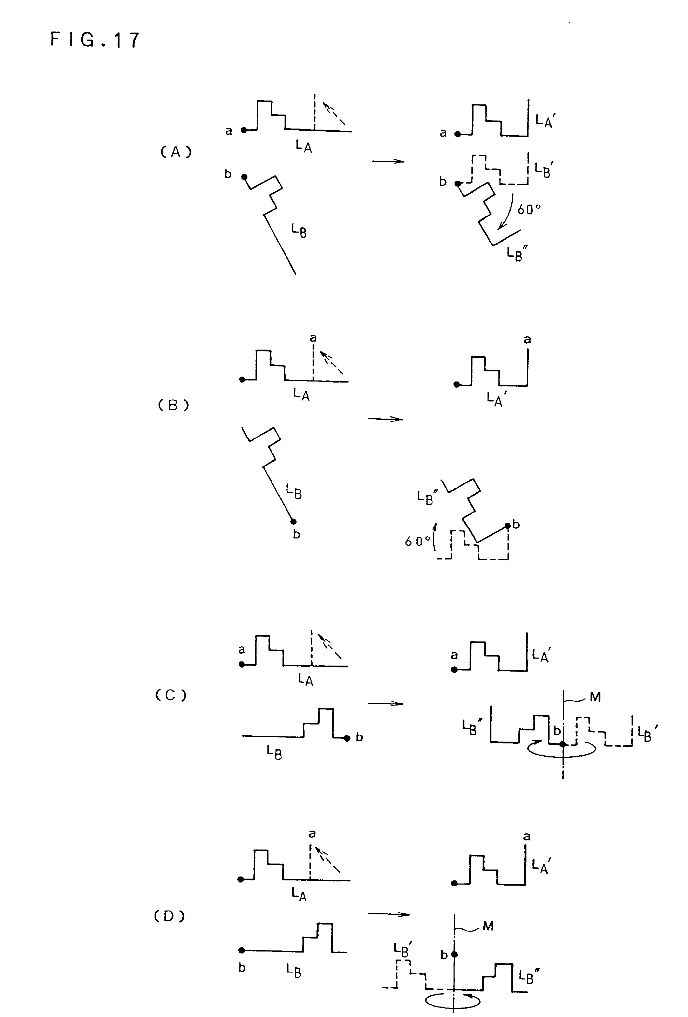

Figure 16 is a chart showing the flow of the transformation work in step 142 of the link transformation process in Figure 14. The operation is described in conjunction with Figure 17. Here, it is supposed that the transformed line is L_{A}, the line linked with L_{A} is L_{B}, the fixed end of L_{B} is b, and the end of L_{A} corresponding to the fixed end b is a.

First, a replica L_{A}' of the line L_{A} is created (step 161 in Figure 16). Next, the difference between the coardinate values of the end points a and b is calculated and added to the coordinate value of each point of line L_{A}', obtaining a line L_{B}' (step 162), and the link relationship is determined (step 163). For the translation and rotation link, the coordinate values of each point of line L_{B}' are rotated around the end point b by a relative angle, obtaining a line L_{B}" (step 164). For the glide-reflection link, the coordinate values of each point of line L_{B}' are changed to the values of the point which is symmetrical with respect to a "line passing through b and having the inclination of a relative angle," obtaining a line L_{B}" (step 165). Finally, the information of each point of L_{B} is replaced by the information of each point of line L_{B}" (step 166).

(A) of Figure 17 shows an example of the translation and rotation link. This is for forward correspondence and the relative angle is 60 degrees. After the line L_{A} is transformed to line L_{A}', the transformed line L_{A}' is translated so that the fixed end b of the other linked line L_{B} is in coincidence with each corresponding end point of the transformed line L_{A}', thereby obtaining the line L_{B}', and the line L_{B}' is rotated around the fixed end b by the specified angle of 60 degrees to obtain the line L_{B}".

(B) of Figure 17 represents the case of reverse correspondence. It is seen that the position of line L_{B}" with respect to the line L_{A}' largely differs depending on the link relationship.

(C) of Figure 17 shows an example of the glide-reflection link in which the connection is forward correspondence and the angle of the axis of reflection is 90 degrees. In the glide-reflection link, after line L_{A} is transformed to line L_{A}', line L_{A}' is translated so that each corresponding point of line L_{A}' matches the fixed end b of the other linked line L_{B}, obtaining a line L_{B}', and the line L_{B}' is transformed by being flipped around the fixed end b and a straight line M inclined by a specified angle of 90 degrees, thereby obtaining a line L_{B}". (D) represents the case of reverse correspondence. Thus, the position of line L_{B}" with respect to the line LA largely differs depending on the link relationship.

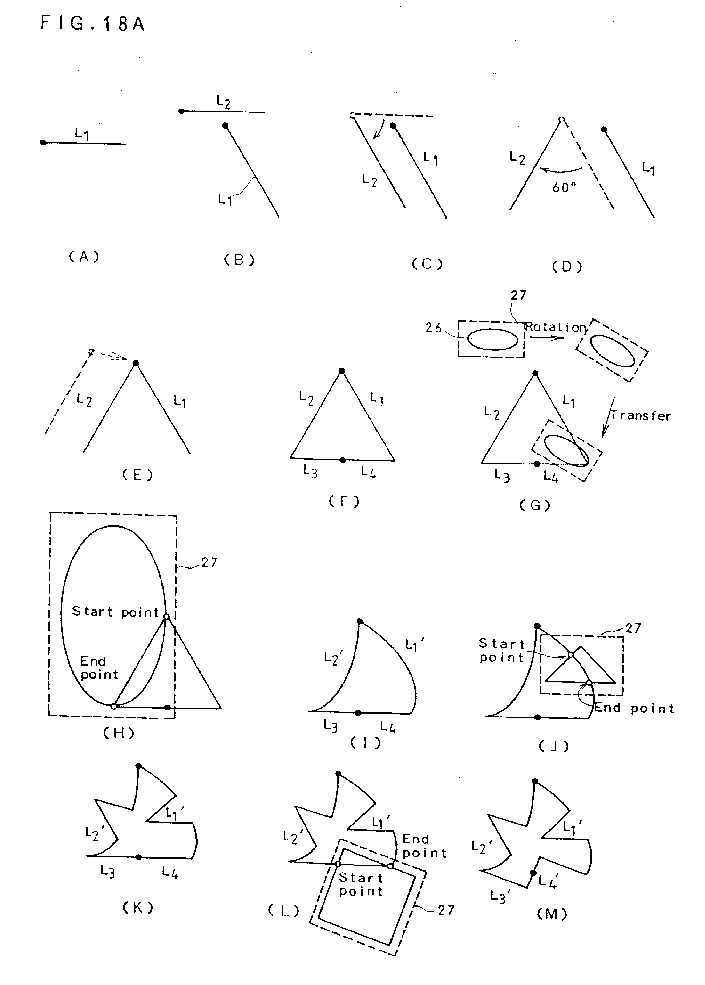

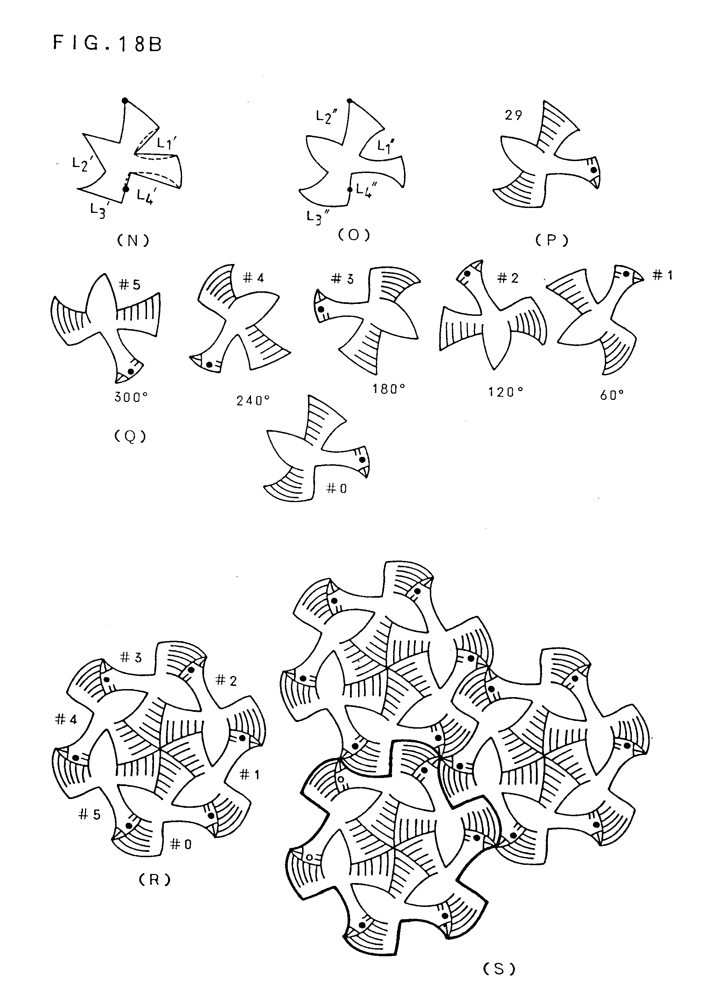

Figure 18 (Figures 18A, 18B) shows an example of drawing a picture of birds using the method being described. In this example, one line pair is prepared for a translation and rotation link of 60 degrees and forward correspondence, and for a translation and rotation link of 180 degrees and forward correspondence, respectively. The fixed ends are connected together in each pair and the free ends are made to match at two points.

First, "line generation" is selected from the menu to generate a line L₁ (A). Then, after selecting "line rotation" to change the angle of the line L_{1'} "line generation" is selected to generate an other line L₂(B), and "translation and rotation" is selected from the menu to put the two lines in a translation and rotation link relationship (C). "Relative angle change" is selected from the menu to set the rotation angle to 60 degrees (D). "Line transfer" is selected to move the line L₂ so that the fixed end of the line L₂ and the fixed end of the line L₁ are made to match (E). Similarly, another pair of lines L₃ and L₄ is generated and combined with the pair of lines L₁ and L₂ to make one a regular triangle as a closed curve (F). Then, an ellipsoidal model in the model library is taken. This model is rotated and moved so as to overlap the vicinity of the regular triangle (G). Next, the ellipsoid is expanded, the start point PS, the end point PT and the direction of path are specified, and the line L₂ is transformed to a line L₂' (H). The other line L₁ is transformed to a line Lᵢ' by a link translation process (I). Further, taking a triangle in the library as a model, the start point PS, the end point PT and the direction of path are specified for the line Lᵢ', which is thereby transformed (J). Line L₂' is also transformed by a link transformation process (K). In addition, taking a square as a model, the start point PS, the end point P and the direction of path are specified for line L₄, which is thereby transformed (L), and line L₃ is also transformed by a link transformation process (M).

Similarly, the transformation is continued using models such as a circle and ellipsoid (N, O)(Figures 18B). Finally, the detail is finished up using the conventional drawing program as needed, thereby completing a tile or basic pattern 29 (P). This basic pattern is replicated to prepare six tiles, which are rotated by 60 degrees, respectively (Q), and the patterns are moved so that the centres of six-fold rotation objects are in coincidence (R). By further replicating and arranging the finished pattern, a plane tessellation is obtained (S).

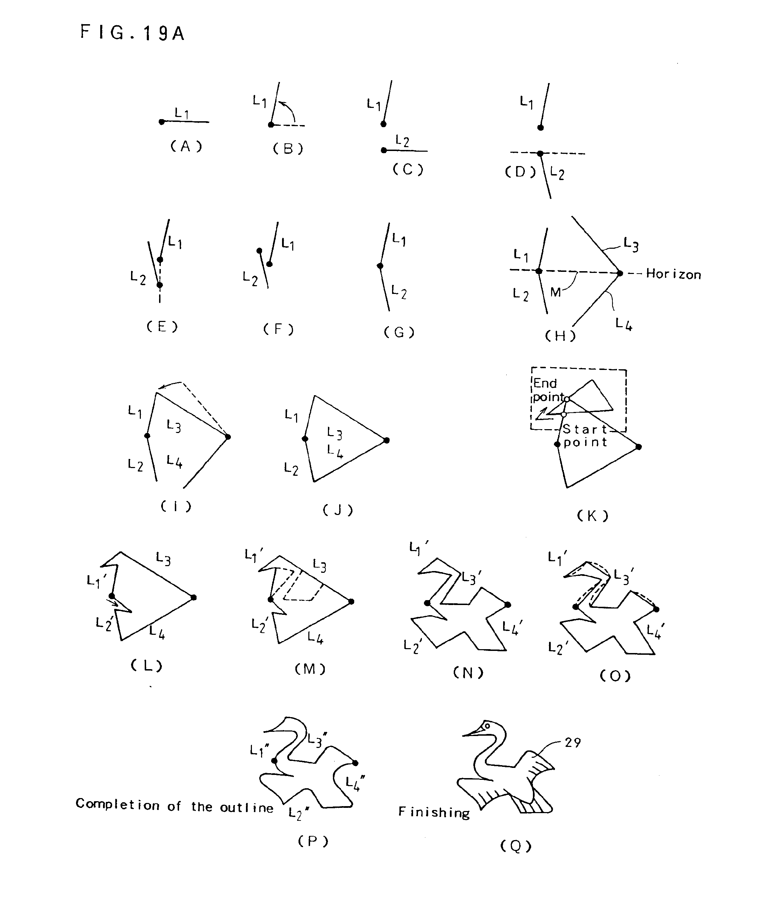

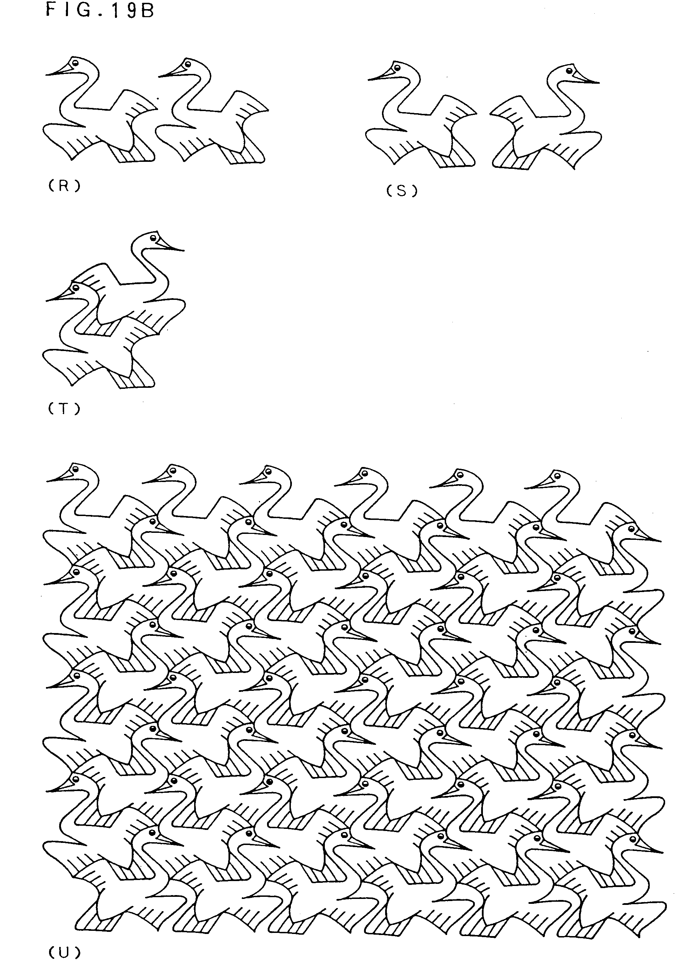

Figure 19 (Figures 19A, 19B) shows another example of drawing a picture of birds using the method being described. In this example, two pairs of line with reverse correspondence are prepared. The fixed ends of each pair of lines are connected together and the free ends of the lines are made to match each other at two points.

First, "line generation" is selected from the menu to generate a line L₁ (A). Then, "line rotation" is selected to change the angle of the line L₁ (B). "Line generation" is selected to generate an other line L₂ (C), and "glide-reflection" is selected from the menu to put the two lines in a glide-reflection link relationship. The angle of an axis of reflection M assumes the initial value of 0 degrees (D). "Relative angle change" is selected from the menu to change the angle of the axis of reflection M to 90 degrees (E). "Fixed end change" is selected to change the fixed end of the line L₂ to the other end (F). "Line transfer" is selected to move the fixed end of the line L₂ so that it matches the fixed end of the line L₁ (G).

Similarly, the other pair of lines (lines L₃ and L₄) are made (H), and both pairs are combined to make a closed curve (I and J). The shape of the closed curve greatly affects the shape of the finally obtained basic pattern. Then, a triangular model in the model library is taken. This model is rotated and moved to transform the line L₁ (K). The other line L₂ in a glide-reflection relationship correspondingly transforms (L). By subsequently repeating similar processing, the outline is completed (M to P). Finally, the detail is finished using the conventional drawing program as needed thereby completing a tile or basic pattern 29 (Q).

The basic pattern is replicated (R) (Figure 19B), and the replica is laterally reversed to make a mirror image (S) and moved so that the edges are in coincidence (T). By further replicating and arranging the completed pattern, a plane tessellation is obtained (U).

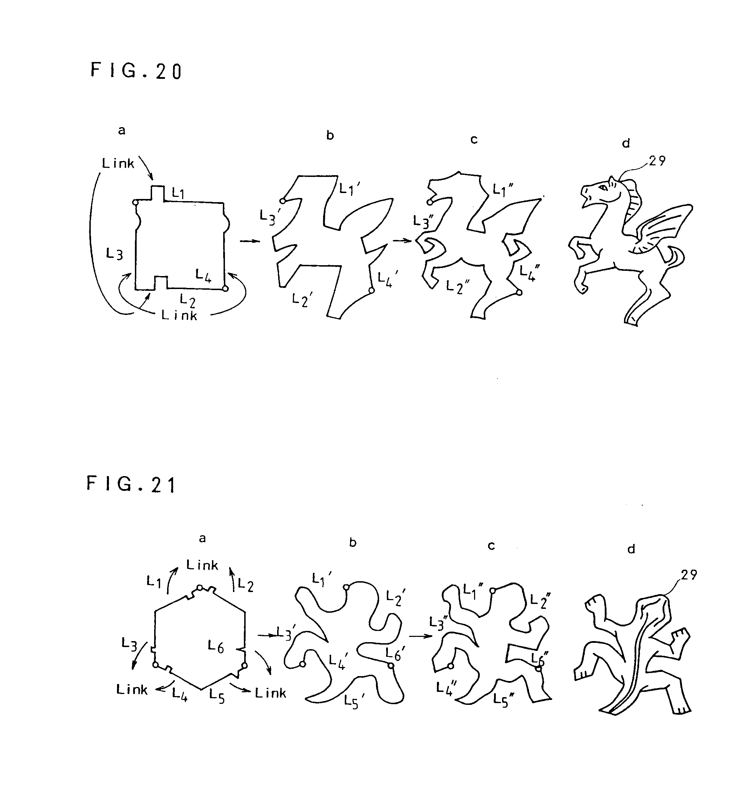

The example shown in Figure 20 creates a picture of a winged horse as a basic pattern 29. Two pairs of curves (L₁ and L₂, L₃ and L₄) in a relationship of a translation and rotation link of 0 degrees with reverse correspondence, and one set of fixed ends of the respective pairs are connected together. The free ends of one of the sets of the lines connected in this way are arranged so as to match (touch) the unpaired free ends of the other set (a). Subsequently a transformation is performed as shown in (b) to (c).

Figure 21 creates a picture of a lizard as a basic pattern 29. First, three pairs of curves (L₁ and L₂, L₃ and L₄, L₅ and Lₛ) in a relationship of a translation and rotation link of 120 degrees with forward correspondence are prepared, and the free ends are connected together for each pair. These are arranged so that the three fixed ends form a regular triangle (a). The adjoining free ends are made to match each other, but these points need not exist at the vertexes of a regular hexagon. When the free ends are made to match at two places, the remaining pair of free ends necessarily match, thereby forming a closed area.

A design which is made by using the present invention is geometrically artistic, and it can be said that its creation is useful by itself. In addition, as a plane can completely be covered with replication of the same pattern, such mosaic pattern can widely be used in the field of architectural ornament design of walls and floors and the field of clothing design.

## Claims

1. Apparatus for generating a set of patterns (25) suitable for forming a plane tessellation comprising input means (1, 2, 11) for generating a set of lines (L1, L2, L3, L4), processing means (3) for modifying said lines, and display means (4, 5) for displaying the result of said modification process,
characterised in that said processing means comprises
line moving and modifying means (12,13, 14, 15, 16, 17) for placing said lines in selected relative positions and modifying said lines so as to form a basic pattern,
line transformation means 14) for transforming said lines using selected shapes in a complementary manner so as to transform said basic pattern into a final pattern suitable for tessellation, and
replicating means for replicating said final pattern to form said set of patterns.

2. Apparatus as claimed in Claim 1 characterised in that said line moving and modifying means comprises means (11, 12) for specifying a fixed end for each line, means (12) for defining the relative positions of said fixed ends, and means (13, 14, 15, 16, 17) for moving said lines relative to each other about said fixed ends.

3. Apparatus as claimed in either of the preceding claims characterised in that said line transformation means comprises storage means (23) for storing a set of shapes, and selection means for selecting one or more of said shapes for use in transforming said set of lines.

4. A method of generating a set of patterns suitable for forming a plane tessellation comprising generating a set of lines, moving and modifying said lines, and displaying the result of said modification process,
characterised in that said moving and modifying step comprises
placing said lines in selected relative positions and modifying said lines so as to form a basic pattern,
transforming said lines using selected shapes in a complementary manner so as to transform said basic pattern into a final pattern suitable for tessellation, and
replicating said final pattern to form said set of patterns.

5. A method as claimed in Claim 1 characterised in that said line moving and modifying step comprises specifying a fixed end for each line, defining the relative positions of said fixed ends, and moving said lines relative to each other about said fixed ends.

6. A method as claimed in Claim 4 or Claim 5 characterised in that said line transformation step comprises storing a set of shapes, and selecting one or more of said shapes for use in transforming said set of lines.
